# EUROPÄISCHE PATENTSCHRIFT

(11) **EP 2 687 837 B1**
(45) Veröffentlichungstag und Bekanntmachung des Hinweises auf die Patenterteilung: **26.10.2016**
(21) Anmeldenummer: 12177180.2
(22) Anmeldetag: 19.07.2012
(51) Int. Cl.: G01N 21/89, G01N 21/898, G01B 11/02

(54) **Verfahren und System zur Auflichtinspektion von wenigstens zwei gegenüberliegenden oberen Plattenkanten einer bewegten Platte**
Method and system for incident light inspection of at least two opposing top panel edges of a moving panel
Procédé et système destiné à l'inspection de lumière réfléchie depuis au moins deux bords supérieurs opposés d'une plaque en déplacement

(43) Veröffentlichungstag der Anmeldung: 22.01.2014
(73) Patentinhaber: Baumer Inspection GmbH, 78467 Konstanz (DE)
(72) Erfinder: Dr. Horrer, Andreas, 78476 Allensbach (DE); Hans-Peter, Diehl, 78462 Konstanz (DE)
(74) Vertreter: Strauss, Steffen

(56) Entgegenhaltungen:
- EP-A1- 0 007 079
- DE-A1- 19 960 653
- DE-C1- 19 609 045
- US-A- 5 214 490

## Beschreibung

Die vorliegende Erfindung betrifft ein Verfahren zur Auflichtinspektion von wenigstens zwei gegenüberliegenden oberen Plattenkanten einer Platte. Ferner betrifft die Erfindung ein Lichtsteuerungssystem und ein System zur Auflichtinspektion von wenigstens zwei gegenüberliegenden oberen Plattenkanten einer Platte, vorzugsweise von sich in einer Bewegungsrichtung der Platte gegenüberliegenden Plattenkanten.

Die Druckschrift EP 0 007 079 A1 offenbart ein Verfahren und eine Vorrichtung zum Abtasten von bewegten Werkstücken.

Bei der Inspektion von Platten wird die Fläche der Plattenoberseite meistens im Auflicht und die Plattenkanten im Durchlicht inspiziert. Für die Inspektion der Kante sind relativ aufwändige Platteninspektionssysteme nötig, die entweder im telezentrischen Durchlicht arbeiten oder aus einer Seitenansicht die Ränder der Platte inspizieren. Eine Inspektion der Kanten im Auflicht ist bisher nicht möglich, da bei den bestehenden Systemen auch eine Plattenseitenfläche mit abgebildet wird. Eine Extraktion der interessierenden Plattenkante ist in diesem Fall kaum zu realisieren.

Ziel der vorliegenden Erfindung ist es, eine Inspektion der Plattenkanten im Auflicht zu ermögtichen.

Erfindungsgemäß wird dies gelöst durch ein Verfahren zur Auflichtinspektion gemäß Anspruch 1.

Ferner wird die Aufgabe durch ein System zur Auflichtinspektion gemäß Anspruch 10 gelöst.

In einer bevorzugten Ausführung sind die erste Plattenkante eine vordere Plattenkante und die weitere Plattenkante eine hintere Plattenkante einer in einer Bewegungsrichtung der Platte gegenüberliegenden oberen Plattenkanten.

Erfindungsgemäß wird eine Platte, die sich in einer Bewegungsrichtung bewegt, zuerst aus einer ersten Beleuchtungsrichtung vom Platteninneren, d.h. aus einer Richtung, die in einer Draufsicht auf die Plattenoberseite vom Platteninneren schräg über die zu untersuchende vordere Kante nach außen hin verläuft, beleuchtet. Dadurch entsteht ein Schattenwurf, der die an die Plattenoberseite angrenzende vordere Plattenseitenfläche verdunkelt, wohingegen die Plattenoberseite hell erleuchtet ist. Der Übergang zwischen hell und dunkel befindet sich genau an der zu inspizierenden vorderen Plattenkante und kann damit zur Inspektion dieser vorderen Plattenkante genutzt werden. In einem zweiten Schritt wird die Beleuchtungsrichtung verstellt, so dass nunmehr die hintere Plattenkante schräg vom Platteninneren nach außen hin beleuchtet wird. Analog zum ersten Schritt entsteht auch hier ein Schattenwurf, bei dem der Übergang zwischen hell und dunkel genau an der zu inspizierenden Plattenkante liegt. Da auch in diesem Fall das Licht vom Platteninneren her kommt, ist die hintere Plattenseitenfläche dunkel und die Plattenoberseite hell. Eine Inspektion der Kante ist durch den starken Helligkeitskontrast, der genau an der zu untersuchenden Plattenkante liegt, leicht möglich.

Hierzu wird ein Abbild der vorderen Plattenkante aufgenommen, wenn sie in der ersten Beleuchtungsrichtung beleuchtet wird. Es wird ein Abbild der hinteren Plattenkante aufgenommen, wenn sie in der zweiten Beleuchtungsrichtung beleuchtet wird.

Die erfindungsgemäße Lösung kann durch die folgenden, jeweils für sich vorteilhaften und beliebig miteinander kombinierbaren Weiterentwicklungen weiter verbessert werden.

Das Verfahren kann automatisch, zum Beispiel in einem automatisierten System oder Verfahren angewendet werden.

Um den Kontrast möglichst hoch zu halten, kann zunächst nur die vordere Plattenkante und dann nur die hintere Plattenkante beleuchtet werden. Dadurch wird vermieden, dass unnötig viel Licht in das System eingebracht wird. Die Entstehung von Streulicht wird dadurch weiter vermieden und der Kontrast an der zu untersuchenden Kante erhöht. Ferner kann eine solche Ausgestaltung Energie sparen.

Alternativ hierzu kann eine Verstellung zwischen der ersten und der zweiten Beleuchtungsrichtung auch alternierend verlaufen.

Vorteilhafterweise wird eine Plattenseitenfläche, deren Normalenvektor parallel zur Bewegungsrichtung liegt und die an die untersuchte Kante angrenzt, weniger stark beleuchtet als die Plattenoberseite. Dadurch kann der Kontrast zwischen Hell und Dunkel erhöht sein. Insbesondere kann die Plattenseitenfläche, deren Normalenvektor parallel zur Bewegungsrichtung ist und die an die untersuchte Kante angrenzt, unbeleuchtet sein. Die Plattenseitenfläche kann nicht aktiv oder direkt beleuchtet sein. Ferner kann auch eine indirekte Beleuchtung durch Streulicht und/oder Restlicht durch Abschirmung und/oder Abschattung verhindert und/oder minimiert sein.

Zur Inspektion der wenigstens zwei gegenüberliegenden oberen Plattenkanten als Mass für eine Beurteilung der Qualität und / oder für eine geometrische Vermessung der Platte wird jeweils ein Abbild der untersuchten Plattenkante mit einer Erfassungvorrichtung aufgenommen. Als eine Erfassungvorrichtung kann beispielsweise eine Kamera zu einem bestimmten Zeitpunkt ein zweidimensionales Abbild der Region um die Kante aufnehmen.

Da bei solchen zweidimensionalen Momentaufnahmen jedoch oft Abbildungsfehler und Verzerrungen entstehen, wird vorteilhafterweise eine Zeilenkamera zur Aufnahme eines Bildes der jeweiligen Plattenkante benutzt. Eine solche Zeilenkamera kann quer zur Bewegungsrichtung über der bewegten Platte angebracht sein. Ein zweidimensionales Abbild der Platte kann in diesem Fall durch Zusammenfügen zeitlich hintereinander liegender Aufnahmen zu einem Gesamtbild erfolgen. Durch die Bewegung der Platte werden dabei nacheinander verschiedene, in Bewegungsrichtung hintereinander liegende Bereiche der Platte und insbesondere auch die untersuchte Plattenkante abgebildet.

Die aufgenommenen Abbilder der untersuchten Plattenkante können umgewandelt, weiterverarbeitet und/oder weitergeleitet werden. Beispielsweise können die Abbilder der untersuchten Plattenkante digitalisiert werden. Solche Daten können zwischengespeichert werden. Zusammen mit weiteren Abbildern der Platte und/oder der Plattenkante können diese Daten verwendet werden, um zusätzliche Informationen zu gewinnen.

Ein Abbild einer untersuchten Plattenkante kann auch permanent gespeichert werden. Das Abbild oder entsprechende Daten können also auch nach einem Ausschalten oder einem Ausfall beispielsweise einer EDV-Anlage gespeichert bleiben. Dazu kann ein Speicher, etwa eine Festplatte mit einem Inspektionssystem verbindbar oder verbunden sein. Dadurch kann etwa eine Nachverfolgbarkeit der untersuchten Platte gegeben sein. Ferner können aus solchen Daten Informationen über ein Qualitätsniveau eines Produktionsverfahrens oder verwendeter Materialien gewonnen werden.

Um ein einfaches Justieren zu gewährleisten, kann die untersuchte Plattenkante senkrecht inspiziert werden. Die Inspektion kann aus einer Richtung, die parallel zu einem Normalenvektor der Plattenoberseite liegt, erfolgen. Durch eine solche Ausgestaltung können Abbildungsfehler oder Verzerrungen verringert oder gänzlich ausgeschaltet sein.

Um das Verfahren möglichst einfach zu gestalten, kann nur an einer einzigen Stelle oder in einem einzigen Bereich inspiziert werden. Die vordere Plattenkante kann dann zu einem ersten Zeitpunkt, zu dem sich die vordere Plattenkante im Inspektionsbereich befindet, vom Platteninneren beleuchtet werden. Zu einem zweiten Zeitpunkt, zu dem sich die hintere Plattenkante im Inspektionsbereich befindet, kann die hintere Plattenkante vom Platteninneren her beleuchtet werden. Dazwischen kann die Beleuchtungsrichtung verstellt werden.

Die vordere Plattenkante kann in einem ersten Zeitraum beleuchtet werden. Der erste Zeitraum kann so kurz sein, dass nur die vordere Plattenkante beleuchtet wird, wenn sie sich im Inspektionsbereich befindet. Der erste Zeitraum kann jedoch auch länger sein, -insbesondere wenn die Inspektion der Plattenkante zeilenmäßig erfolgt, d.h. wenn ein zweidimensionales Abbild der Plattenkante und des daran entstehenden Schattenwurfes erst durch das Zusammenfügen von quer zur Bewegungsrichtung erhaltenen Abbildern möglich ist. Auch die Beleuchtung der hinteren Plattenkante kann entweder nur kurz oder über einen längeren Zeitraum erfolgen.

Insbesondere bei rechtwinkligen Plattenkanten und/oder bei einer senkrechten Inspektion der Plattenkante kann die Platte zuerst in und anschließend entgegen der Bewegungsrichtung der Platte beleuchtet werden. In und entgegen der Bewegungsrichtung bedeutet hierbei, dass die Beleuchtungsrichtung Komponenten aufweist, die in bzw. entgegen der Bewegungsrichtung der Platte verlaufen.

Zusätzlich zu der Inspektion der Plattenkanten kann auch die Plattenoberseite inspiziert werden. Insbesondere kann dies gleichzeitig erfolgen. Vorteilhafterweise werden die bei der Inspektion der Plattenkanten gewonnenen Informationen auch zur Inspektion der Plattenoberseite benutzt. Beispielsweise kann ein einziger Satz an Daten, etwa ein aufgenommenes Abbild sowohl zur Inspektion der Kanten als auch zur Analyse und/oder Inspektion der Oberfläche benutzt werden. Dabei ist es vorteilhaft, wenn die Platte, insbesondere die Plattenoberseite, kontinuierlich beleuchtet wird. Der Wechsel der Beleuchtungsrichtung kann im Wesentlichen ohne Unterbrechung erfolgen. Wird die Plattenoberseite während eines ersten Zeitraumes in einer ersten Beleuchtungsrichtung und während eines zweiten Zeitraums in einer zweiten Beleuchtungsrichtung beleuchtet, so kann der zweite Beleuchtungszeitraum direkt und ohne Unterbrechung auf den ersten Zeitraum folgen. Auch ein zeitlicher Überlapp der beiden Zeiträume ist möglich.

Um zu ermitteln, wann in welche Beleuchtungsrichtung beleuchtet werden soll, kann eine Position einer zu untersuchenden Plattenkante und/oder Platte detektiert werden. Insbesondere kann die Position einer zu untersuchenden Platte detektiert und die Beleuchtungsrichtung abhängig von der Position der Platte verstellt werden. Informationen zur Position können ausgegeben und/oder weitergeleitet werden. Die Position kann beispielsweise mithilfe einer Lichtschranke oder einer Waage ermittelt werden. Auch ein bildverarbeitendes System etwa in Form einer Kamera und daran angeschlossener Elektronik kann dazu dienen, die Position der Platte und/oder einer Plattenkante zu detektieren. Um den Aufwand möglichst gering zu halten, kann standardmäßig in der ersten Beleuchtungsrichtung beleuchtet werden und jeweils nur dann die Beleuchtungsrichtung verstellt werden, wenn durch die Inspektion der vorderen Plattenkante klar ist, dass die erste Plattenkante eine bestimmte Position erreicht oder überschritten hat. Dann kann die hintere Plattenkante beleuchtet und inspiziert werden.. Anschließend wird die Beleuchtungsrichtung wieder in die Standardposition gebracht, in der sie die vordere Plattenkante beleuchtet. Bei dieser Vorgehensweise wird die Beleuchtungsrichtung nach Bedarf verstellt. Der Zeitpunkt, zu dem die Beleuchtungsrichtung verstellt wird, erfolgt mithilfe der Daten, die bei der Inspektion der vorderen Plattenkante anfallen.

In einer vorteilhaften Ausführungsform des Verfahrens wird die Platte bewegt oder transportiert. Insbesondere kann die Platte einzeln bewegt oder transportiert werden. Bei einer solchen gezielten Steuerung der Position und/oder der Bewegung der Platte kann die Bewegung der Platte beispielsweise an einen festen Umschalttakt der Beleuchtungsrichtung angepasst werden. Eine Detektion der Position der Platte und/oder Plattenkanten kann dadurch entfallen. Eine Bewegung und/oder ein Transport der Platte kann beispielsweise durch Befestigung an einer bewegten oder bewegbaren Vorrichtung erreicht werden. Ferner kann auch eine Bewegung der Platte aufgrund ihrer kinetischen Energie und/oder aufgrund der Gravitation gezielt beeinflusst werden. Beispielsweise kann die Bewegung durch Reibung gebremst werden, oder eine Platte dadurch beschleunigt werden, dass sie auf einer schrägen Ebene, beispielsweise auf Rollen, die in einer schiefen Ebene angeordnet sind, aufliegt.

Um nicht nur die sich in einer Bewegungsrichtung einer Platte gegenüberliegenden Plattenkanten, sondern auch die seitlichen Plattenkanten, die zu der Bewegungsrichtung der Platte parallel sind, zu inspizieren, kann eine seitliche Plattenkante oder können mehrere seitliche Plattenkanten vom Platteninneren her beleuchtet werden. Ähnlich wie bei der Beleuchtung der vorderen und der hinteren Plattenkante führt dies dazu, dass an der Seitenkante ein Schattenwurf entsteht, bei dem der Übergang zwischen der hell beleuchteten Plattenoberseite und der dunkleren Plattenseitenfläche genau an der untersuchten Plattenkante verläuft. Vorteilhafterweise werden mehrere seitliche Plattenkanten gleichzeitig vom Platteninneren her beleuchtet. Um gleichzeitig auch die vordere Plattenkante und/oder die hintere Plattenkante inspizieren zu können, kann die Beleuchtung vom Platteninneren sowohl zur vorderen bzw. hinteren Plattenkante und zur seitlichen Plattenkante gerichtet sein.

Um den gesamten Verlauf der oberen Kanten zu inspizieren, können sämtliche Plattenkanten im Verlauf des Verfahrens inspiziert werden.

Insbesondere können im Verlauf des Verfahrens sowohl sämtliche Plattenkanten, die sich an der Oberseite der Platte befinden, als auch die Plattenoberseite selbst inspiziert werden.

Es ist ein Lichtsteuerungssystem zur Auflichtinspektion von wenigstens zwei gegenüberliegenden oberen Plattenkanten einer Platte, vorzugsweise von sich in einer Bewegungsrichtung der Platte gegenüberliegenden Plattenkanten vorgesehen, umfassend eine Beleuchtungseinrichtung mit einer relativ zu der Bewegungsrichtung verstellbaren Beleuchtungsrichtung und eine Steuereinheit, wobei die Steuereinheit dazu ausgestaltet ist, die Beleuchtungsrichtung der Beleuchtungseinrichtung zu verstellen.

Die Beleuchtungseinrichtung kann aus verschiedenen Beleuchtungseinheiten bestehen. Die Beleuchtungseinrichtung und/oder die Beleuchtungseinheit kann beispielsweise eine Lichtquelle sein. An einer solchen Lichtquelle kann Licht generiert werden. Alternativ kann die Beleuchtungseinrichtung oder die Beleuchtungseinheit eine Austrittsöffnung von abgelenktem Licht oder ein Ablenkmechanismus selbst sein.

Die Beleuchtungseinrichtung kann aus mehreren Beleuchtungseinheiten bestehen, wobei eine erste Beleuchtungseinheit in einer ersten Beleuchtungsrichtung und eine zweite Beleuchtungseinheit in einer zweiten Beleuchtungsrichtung gerichtet sind. Das Verstellen der Beleuchtungsrichtung kann in diesem Fall dadurch erreicht werden, dass eine Beleuchtungseinheit eingeschaltet ist, während die andere Beleuchtungseinheit ausgeschaltet ist, und dies anschließend umgekehrt wird. Wenn die Beleuchtungseinheiten nur Austrittsöffnungen von abgelenktem Licht sind, so kann das Verstellen der Beleuchtungseinrichtung durch Öffnen oder Schließen der Austrittsöffnung erfolgen. Alternativ kann der Ablenkwinkel so verändert werden, dass in einem ersten Schritt zunächst Licht aus der ersten Beleuchtungseinheit austritt während aus der zweiten Beleuchtungseinheit kein Licht austritt. In einem zweiten Schritt kann dies umgekehrt sein.

Die Beleuchtungseinrichtung kann aus nur einer einzigen Beleuchtungseinheit bestehen, die sich bewegt, so dass sich ihre Position und die Beleuchtungsrichtung verändert.

Die Beleuchtungseinrichtung kann LEDs oder einen Laser umfassen.

Das Lichtsteuerungssystem kann eine Detektionsvorrichtung umfassen, die dazu ausgestaltet ist, die Position mindestens einer zu untersuchenden Plattenkante zu detektieren und Informationen zur Position auszugeben und/oder weiterzuleiten. Eine solche Detektionsvorrichtung kann beispielsweise eine Lichtschranke oder eine Waage sein. Auch ein bildverarbeitendes System wie beispielsweise eine Kamera mit angeschlossener Elektronik kann als Detektionsvorrichtung dienen. Die Detektionsvorrichtung kann signalübertragend mit der Steuereinheit verbunden sein, so dass die Steuereinheit abhängig von der Position der untersuchten Plattenkante die Beleuchtungsrichtung verstellt.

Die Beleuchtungseinrichtung des Lichtsteuerungssystems kann eine hintere Beleuchtungseinheit mit einer ersten Beleuchtungsrichtung, die eine Komponente in der Bewegungsrichtung aufweist, und eine vordere Beleuchtungseinheit mit einer zweiten Beleuchtungsrichtung, die eine Komponente entgegen der Bewegungsrichtung aufweist, umfassen, wobei die Steuereinheit dazu ausgestaltet ist, die beiden Beleuchtungseinheiten unabhängig voneinander ein- und auszuschalten. Die vordere Beleuchtungseinheit befindet sich in der Bewegungsrichtung der Platte weiter vorne als die hintere Beleuchtungseinrichtung. Die hintere Beleuchtungseinheit kann somit zur Beleuchtung der vorderen Plattenkante und die vordere Beleuchtungseinheit zur Beleuchtung der hinteren Plattenkante dienen.

Die Steuervorrichtung kann so einstellbar sein, dass nur die zur Inspektion notwendige, vom Platteninneren auf die untersuchte Plattenkante gerichtete Beleuchtungseinheit angeschaltet und die andere Beleuchtungseinheit ausgeschaltet ist. Dadurch kann verhindert werden, dass Restlicht oder Streulicht, das von der anderen Beleuchtungseinheit ausgeht, die Qualität der Inspektion der beleuchteten Plattenkante verschlechtert.

Die Steuervorrichtung kann so ausgestaltet sein, dass sie die hintere Beleuchtungseinheit ausschaltet und die vordere Beleuchtungseinheit einschaltet, wenn sich die Platte mittig zwischen den beiden Beleuchtungseinheiten befindet.

Ein erster Teil der vorderen und/oder der hinteren Beleuchtungseinheit kann vom Platteninneren zu einer ersten Plattenseitenkante hin gerichtet sein. Alternativ oder zusätzlich kann ein zweiter Teil der ersten bzw. zweiten Beleuchtungseinheit vom Platteninneren zu einer zweiten Plattenseitenkante hin gerichtet sein. Dadurch kann es möglich sein, zusätzlich zur vorderen und hinteren Plattenkante auch mindestens eine seitliche Plattenkante zu inspizieren.

Die Beleuchtungseinrichtung oder die Beleuchtungseinheit kann beispielsweise linien- oder zeilenförmig sein und sich quer zur Bewegungsrichtung der Platte erstrecken. Sie kann etwa aus verschiedenen Lichtquellen bestehen, die quer zur Bewegungsrichtung hintereinander angeordnet sind. Ein erster Teil der Beleuchtungseinheit, beispielsweise mehrere Lampen, kann vom Platteninneren zu einer ersten seitlichen Plattenkante nach außen hin gerichtet sein. Ein zweiter Teil, beispielsweise weitere Lampen, können zu einer zweiten seitlichen Plattenkante hin gerichtet sein. Falls die Platte an einem Anschlag transportiert oder bewegt wird oder ist, kann nur ein kleiner Teil der Beleuchtungseinheit auf die an einem Anschlag verlaufende Plattenseitenkante gerichtet sein. Ein größerer Teil einer Beleuchtungseinheit kann auf potentielle Positionen einer zweiten seitlichen Plattenkante gerichtet sein. Bei einer solchen Ausgestaltung können beide seitliche Plattenkanten verschieden breiter Platten inspiziert werden. Beispielsweise können mehrere Lampen, die zusammen den zweiten Teil der Beleuchtungseinheit ausmachen, parallel gerichtet sein. Um den Helligkeitskontrast dabei noch weiter zu steigern, können die nicht notwendigen Lampen des zweiten Teils der Beleuchtungseinrichtung unabhängig voneinander und unabhängig vom Rest ein- und ausschaltbar sein.

Wird die Platte mittig ohne Anschlag transportiert, so können ein erster Teil und ein zweiter Teil einer Beleuchtungseinheit in etwa gleich groß sein. Beispielsweise kann eine gleiche Anzahl an Lampen vorhanden sein.

Zwischen einem ersten und einem zweiten Teil einer Beleuchtungseinheit kann ferner ein dritter Teil liegen, der senkrecht auf die Plattenoberseite gerichtet ist.

Insbesondere können der erste und der zweite Teil der vorderen und/oder hinteren Beleuchtungseinheit quer zur Bewegungsrichtung voneinander weg weisen und jeweils nach außen gerichtet sein. Bei einer solchen Ausgestaltung überkreuzen sich die aus dem ersten und zweiten Teil austretenden Lichtbündel nicht. Alternativ können der erste und zweite Teil so ausgerichtet sein, dass sich die austretenden Lichtstrahlen in einer Richtung quer zur Bewegungsrichtung schneiden. Dadurch kann ein austretender Lichtstrahl relativ zu einem Normalenvektor der Plattenoberseite stärker geneigt sein, was die Inspektion vereinfachen kann.

Erfindungsgemäß ist auch ein System zur Auflichtinspektion von sich in einer Bewegungsrichtung einer Platte gegenüberliegenden Plattenkanten vorgesehen, das ein Lichtsteuerungssystem und eine Kanteninspektionsvorrichtung umfasst, wobei die Kanteninspektionsvorrichtung dazu ausgestaltet ist, Helligkeitskontraste an einer zu untersuchenden Kante zu detektieren. Eine solche Kanteninspektionsvorrichtung kann beispielsweise eine Kamera, insbesondere eine Zeilenkamera sein. Die Kanteninspektionsvorrichtung kann senkrecht auf die Platte, d.h. parallel zu einem Normalenvektor der Plattenoberseite gerichtet sein.

Ferner kann das System zur Auflichtinspektion eine Transportvorrichtung umfassen, die eine zu untersuchende Platte bewegt oder transportiert.

Das erfindungsgemäße System zur Auflichtinspektion kann insbesondere automatisiert sein.

Die vorliegende Erfindung kann in einem System zur Auflichtinspektion von wenigstens zwei gegenüberliegenden oberen Plattenkanten einer Platte, vorzugsweise von sich in einer Bewegungsrichtung der Platte gegenüberliegenden Plattenkanten ausgeführt sein. Das System umfasst dabei wenigstens ein Lichtsteuerungssystem mit einer Beleuchtungseinrichtung mit einer relativ zu der Bewegungsrichtung verstellbaren Beleuchtungsrichtung und eine Steuereinheit, wobei die Steuereinheit dazu ausgestaltet ist, die Beleuchtungsrichtung der Beleuchtungseinrichtung zu verstellen.

Ferner umfasst das System eine Erfassungs- und Auswertevorrichtung. Die Erfassungsvorrichtung ist ausgestaltet, Helligkeitskontraste an einer zu untersuchenden Kante zu detektieren. Die Auswertevorrichtung ist ausgestaltet, den Helligkeitskontrast der wenigstens zwei gegenüberliegenden oberen Plattenkanten für eine geometrische Vermessung der Platte oder als ein Mass für eine Beurteilung der Qualität der wenigstens zwei gegenüberliegenden oberen Plattenkanten auszuwerten.

Im Folgenden wird die Erfindung anhand vorteilhafter Ausführungsformen erläutert. Die dabei geschilderten Merkmale können beliebig miteinander kombiniert oder weggelassen werden, je nach dem, auf welche Vorteile es im einzelnen Anwendungsfall ankommt.

Es zeigen:
- Fig. 1: schematisch eine erste Ausgestaltung eines erfindungsgemäßen Verfahrens, eines Lichtsteuerungssystems und eines erfindungsgemäßen Systems zu einem ersten Zeitpunkt;
- Fig. 2: schematisch die erste Ausgestaltung eines erfindungsgemäßen Verfahrens, eines Lichtsteuerungssystems und eines erfindungsgemäßen Systems zu einem zweiten Zeitpunkt;
- Fig. 3: schematisch eine zweite Ausgestaltung eine erfindungsgemäßen Verfahrens, eines Lichtsteuerungssystems und eines erfindungsgemäßen Systems zu einem ersten Zeitpunkt;
- Fig. 4: schematisch die zweite Ausgestaltung eines erfindungsgemäßen Verfahrens, eines Lichtsteuerungssystems und eines erfindungsgemäßen Systems zu einem zweiten Zeitpunkt;
- Fig. 5: schematisch die erste Ausgestaltung eines erfindungsgemäßen Verfahrens, eines Lichtsteuerungssystems und eines erfindungsgemäßen Systems zu einem dritten Zeitpunkt, der zwischen dem ersten und dem zweiten Zeitpunkt liegt;
- Fig. 6: schematisch ein erfindungsgemäßes Verfahren, ein Lichtsteuerungssystem und ein erfindungsgemäßen System in einer Frontalansicht und
- Fig. 7: schematisch eine weitere Ausgestaltung eines erfindungsgemäßen Verfahrens, eines Lichtsteuerungssystems und eines erfindungsgemäßen Systems in einer Frontalansicht.

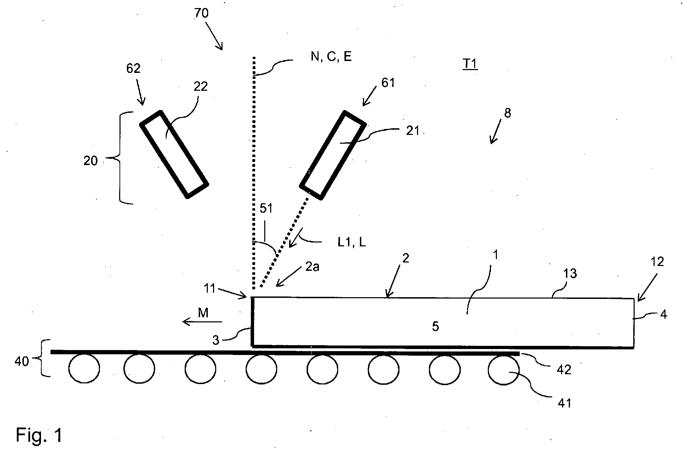

In Fig. 1 wird eine erste Ausgestaltung eines erfindungsgemäßen Verfahrens, eines Lichtsteuerungssystems und eines erfindungsgemäßen Systems zur Auflichtinspektion gezeigt. Eine zu untersuchende Platte 1 bewegt sich in einer Bewegungsrichtung M. Die Platte 1 liegt auf einer Unterlage 42, die wiederum auf Rollen 41 aufliegt. Beispielsweise kann die Unterlage 42 bewegt sein, so dass sich die darauf liegende Platte 1 mit bewegt. Die Rollen 41 können frei drehbar oder angetrieben sein. Zusammen mit den Rollen 41 kann die Unterlage 42 eine Transportvorrichtung 40 darstellen.

Die Platte 1 weist eine Plattenoberseite 2 auf, die der Unterlage 42 gegenüberliegt. Ferner verfügt die Platte 1 über eine vordere Plattenseitenfläche 3, die an einer vorderen Plattenkante 11 an die Plattenoberseite 2 angrenzt. Des Weiteren weist die Platte 1 eine hintere Plattenseitenfläche 4 auf, die an einer hinteren Plattenkante 12 an die Plattenoberseite 2 angrenzt. Ferner verfügt die Platte 1 über seitliche Plattenseitenfläche, die in diesem Fall parallel zur Bewegungsrichtung M liegen. Eine erste seitliche Plattenseitenfläche 5 grenzt an einer ersten seitlichen Plattenkante 13 an die Plattenoberseite 2 an.

Die Platte 1 kann zum Beispiel eine Spannplatte sein. An der Plattenoberseite 2 der Platte 1 kann beispielsweise eine Dekorfolie angebracht sein. Die Platte 1 kann an den Plattenkanten 11, 12, 13 geschnitten worden sein. Um die Qualität der Schnitte zu kontrollieren und gegebenenfalls außerhalb eines Toleranzbereichs liegende Platten auszusortieren, wird die Platte 1 mit dem erfindungsgemäßen Verfahren inspiziert.

Das Verfahren ist zu einem ersten Zeitpunkt T1 dargestellt. Zu diesem ersten Zeitpunkt T1 befindet sich die vordere Plattenkante 11 in einem Inspektionsbereich 70. Eine erste Beleuchtungseinheit 21 einer Beleuchtungseinrichtung 20 beleuchtet die vordere Plattenkante 11, von einer ersten Position 61 aus, in einer ersten Beleuchtungsrichtung L1, die einen ersten Winkel 51 relativ zu einem Normalenvektor N der Plattenoberseite 2 aufweist. Der erste Winkel 51 beträgt vorzugsweise 27° zu dem Normalenvektor N. Die vordere Plattenkante 11 wird also vom Platteninneren 8 her nach außen hin beleuchtet. Dadurch wird ein vorderer Teil 2a der Plattenoberseite 2 hell erleuchtet, wohingegen die vordere Plattenseitenfläche 3 durch den Schattenwurf dunkler ist als der vordere Teil 2a der Plattenoberseite 2. An der vorderen Plattenkante 11 entsteht somit ein scharfer Übergang zwischen Dunkel und Hell, der bei einer perfekt verlaufenden vorderen Plattenkante 11 gerade ist. Bei Defekten oder Unregelmäßigkeiten ist die Grenze zwischen Hell und Dunkel nicht mehr gerade. Defekte oder Unregelmäßigkeiten an der vorderen Plattenseitenfläche 3 beeinflussen die Inspektion der vorderen Plattenkante 11 nicht. Nichtsdestotrotz kann zusätzlich eine Inspektion der vorderen Plattenseitenfläche 3 oder anderer Plattenseitenflächen durchgeführt werden.

Der Helligkeitskontrast an der vorderen Plattenkante 11 kann inspiziert werden. Insbesondere kann der Verlauf der Grenze zwischen Hell und Dunkel inspiziert werden. Beispielsweise kann dies in einer Inspektionsrichtung C geschehen. Die hier gezeigte Inspektionsrichtung C stimmt mit der Richtung des Normalenvektors N der Plattenoberseite 2 überein. Die Inspektionsrichtung C ist also senkrecht auf die Plattenoberseite 2 und in diesem Fall parallel zur vorderen Plattenseitenfläche 3. Zu dem hier gezeigten ersten Zeitpunkt T1 befindet sich die vordere Plattenkante 11 genau in der Inspektionsrichtung C.

Die Inspektionsrichtung C kann insbesondere in einer Inspektionsebene E liegen. Die hier gezeigte Inspektionsebene E steht senkrecht zur Zeichenebene und ist parallel zur vorderen Plattenseitenfläche 3. Beispielsweise kann eine Zeilenkamera, die quer zur Bewegungsrichtung M in der Inspektionsebene E liegt, zur Inspektion der vorderen Plattenkante 11 benutzt werden. Zu verschiedenen Zeitpunkten nimmt die Zeilenkamera ein zeilenförmiges Abbild des unter ihr liegenden Bereiches auf. Diese zeilenförmigen Abbilder können zu einem zweidimensionalen Bild zusammengesetzt werden. Dadurch kann der Verlauf der Grenze zwischen Hell und Dunkel ermittelt werden.

Auch eine Inspektion der vorderen Plattenkante 11 aus einem anderen Winkel als senkrecht zur Plattenoberseite 2 ist möglich. Eine senkrechte Anordnung des Inspektionswinkels C ist jedoch für die meist elektronische Bildverarbeitung zur Kanteninspektion vorteilhaft, da dabei relativ wenige Daten anfallen.

Eine zweite Beleuchtungseinheit 22 der Beleuchtungseinrichtung 20 ist zur Beleuchtung der hinteren Plattenkante 12, von einer zweiten Position 62 aus, in einer zweiten Beleuchtungsrichtung L2, die einen zweiten Winkel 52 relativ zu einem Normalenvektor N der Plattenoberseite 2 vorgesehen. Der zweite Winkel 52 beträgt vorzugsweise 27° zu dem Normalenvektor N.

Zum hier gezeigten ersten Zeitpunkt T1 ist die zweite Beleuchtungseinheit 22 der Beleuchtungseinrichtung 20 ausgeschaltet. Würde diese zweite Beleuchtungseinheit 22 eingeschaltet sein, so würde sie die Plattenoberseite 2 und die vordere Plattenseitenflächen 3 beleuchten, wodurch sich der Kontrast an der vorderen Plattenkante 11 verschlechtern würde.

Die erste Beleuchtungseinheit 21 und die zweite Beleuchtungseinheit 22 können quer zur Bewegungsrichtung M verlaufen. Beispielsweise kann es sich um linien- oder zeilenförmige Beleuchtungseinheiten handeln.

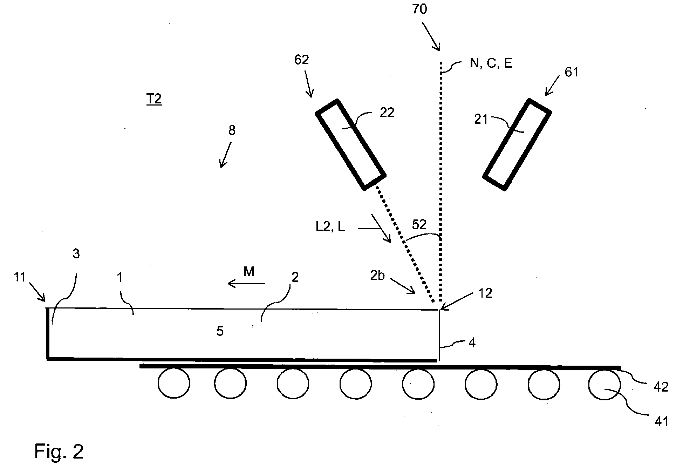

In Fig. 2 ist das erfindungsgemäße Verfahren, das Lichtsteuerungssystem und das erfindungsgemäße System zur Auflichtinspektion aus Fig. 1 zu einem zweiten Zeitpunkt T2 dargestellt. Im Vergleich zum ersten Zeitpunkt T1 hat sich die Platte 1 in der Bewegungsrichtung M weiter bewegt. Die vordere Plattenkante 11 befindet sich nun nicht mehr im Inspektionsbereich 70. Zu diesem zweiten Zeitpunkt T2 befindet sich nun die hintere Plattenkante 12 im Inspektionsbereich 70 und wird von der zweiten Beleuchtungseinheit 22 aus der zweiten Position 62 beleuchtet. Die erste Beleuchtungseinheit 21 ist jetzt ausgeschaltet oder nicht aktiv. Alternativ kann sie auch abgedeckt sein, so dass kein Licht aus der Beleuchtungseinheit 21 austreten kann.

Die zweite Beleuchtungseinheit 22 beleuchtet die hintere Plattenkante 12 vom Platteninneren 8 her nach außen, so dass ein hinterer Teil 2b der Plattenoberseite 2 heller ist als die hintere Plattenseitenfläche 4 und der Übergang zwischen Hell und Dunkel an der hinteren Plattenkante 12 liegt. Die hintere Plattenkante 12 wird in einer Inspektionsrichtung C, die in einer Inspektionsebene E quer zur Bewegungsrichtung liegt, inspiziert. Die Inspektionsrichtung C ist wieder parallel zur Richtung des Normalenvektors N der Plattenoberseite 2.

Die hintere Plattenkante 12 wird unter einem zweiten Beleuchtungswinkel 52 zwischen der zweiten Beleuchtungsrichtung L2 und dem Normalenvektor N beleuchtet. Der hier gezeigte zweite Winkel 52 ist genauso groß wie der erste Winkel 51 aus Fig. 1. Erfindungsgemäß ist dies nicht notwendig, beide Winkel können auch verschieden groß sein.

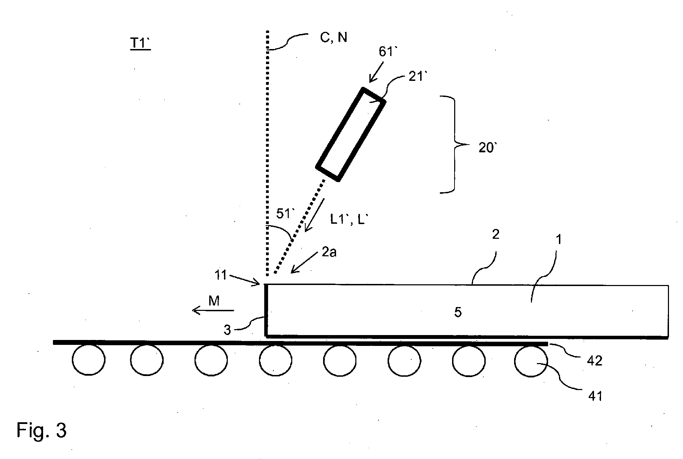

In Fig. 3 ist eine zweite Ausgestaltung eines erfindungsgemäßen Verfahrens, eines Lichtsteuerungssystem und eines erfindungsgemäßen Systems zur Auflichtinspektion von Platten zu einem ersten Zeitpunkt T1' dargestellt. Die zu untersuchende Platte 1 bewegt sich in der Bewegungsrichtung M und wird zu dem ersten Zeitpunkt T1' im vorderen Teil 2a der Plattenoberseite 2 von der Beleuchtungseinrichtung 20' in Form einer ersten Beleuchtungseinheit 21' beleuchtet. Die erste Beleuchtungseinheit 21' ist auf die vordere Plattenkante 11 gerichtet und erzeugt damit einen starken Helligkeitskontrast zwischen dem vorderen Teil 2a der Plattenoberseite 2 und der vorderen Plattenseitenfläche 3 entlang der vorderen Plattenkante 11. Der Übergang zwischen Hell und Dunkel an der vorderen Plattenkante 11 wird in einer Inspektionsrichtung C gemessen.

Im Gegensatz zu der in den Fig. 1 und 2 gezeigten Beleuchtungseinrichtung 20 verfügt diese Beleuchtungseinrichtung 20' nur über eine einzige Beleuchtungseinheit in Form der ersten Beleuchtungseinheit 21'. Zu dem hier gezeigten ersten Zeitpunkt T1' beleuchtet diese erste Beleuchtungseinheit 21' die vordere Plattenkante 11 in einer ersten Beleuchtungsrichtung L1' und damit relativ zum Normalenvektor N der Plattenoberseite 2 unter einem ersten Winkel 51'. Zu diesem ersten Zeitpunkt T1' befindet sich die erste Beleuchtungseinheit 21' an einer ersten Position 61'. Im weiteren Verlauf des Verfahrens wird die Beleuchtungsrichtung L' der Beleuchtungseinrichtung 20' verstellt.

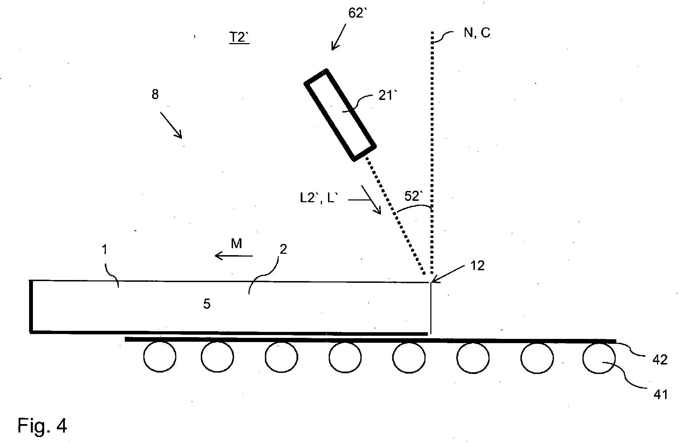

In Fig. 4 ist das in Fig. 3 gezeigte Verfahren, Lichtsteuerungssystem und System zur Auflichtinspektion zu einem zweiten Zeitpunkt T2' dargestellt. Zu diesem zweiten Zeitpunkt T2' befindet sich die erste Beleuchtungseinheit 21' an einer zweiten Position 62' und beleuchtet die hintere Plattenkante 12 vom Platteninneren 8 her nach außen in einer zweiten Beleuchtungsrichtung L2' unter einem zweiten Winkel 52' relativ zum Normalenvektor N der Plattenoberseite 2. Die Beleuchtungsrichtung L' hat sich also verändert.

Die Veränderung der Beleuchtungsrichtung L' kann beispielsweise kontinuierlich durch eine Bewegung der Beleuchtungseinrichtung 21' von einer ersten Position 61' zu einer zweiten Position 62' geschehen, während die Beleuchtungseinheit 21' permanent die Platte 1 beleuchtet und die Platte 1 dabei in der Inspektionsrichtung C durchgehend inspiziert wird. Alternativ kann auch eine erste Messung zum ersten Zeitpunkt T1' und später nach einer Unterbrechung der Beleuchtung und einem Verstellen der Beleuchtungsrichtung L' und der Position der Beleuchtungseinheit 21' eine zweite Messung zu dem zweiten Zeitpunkt T2' stattfinden.

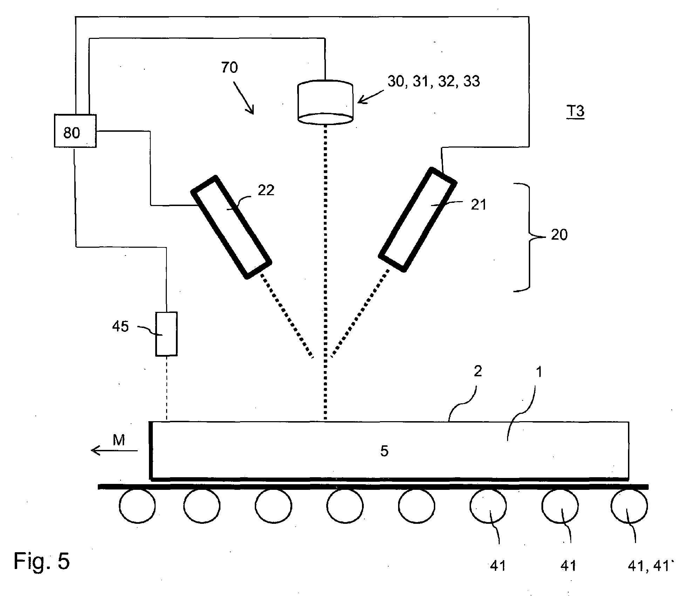

Fig. 5 zeigt ein erfindungsgemäßes Verfahren, ein Lichtsteuerungssystem und ein erfindungsgemäßes System zur Auflichtinspektion. Beispielsweise kann es sich um die Ausgestaltung gemäß den Fig. 1 und 2 zu einem dritten Zeitpunkt T3, der zwischen dem ersten Zeitpunkt T1 und dem zweiten Zeitpunkt T2 liegt, handeln. Wie hier gezeigt, können zu diesem dritten Zeitpunkt T3 sowohl die erste Beleuchtungseinheit 21 als auch die zweite Beleuchtungseinheit 22 die Plattenoberseite 2 der Platte 1 beleuchten. Um zu verhindern, dass die Platte zu einem Zeitpunkt nicht beleuchtet ist, und somit eine Inspektion erschwert ist, kann die gemeinsame Beleuchtung durch die beiden Beleuchtungseinheiten 21, 22 über einen längeren Zeitraum erfolgen. Alternativ kann der dritte Zeitpunkt T3 der Zeitpunkt sein, zu dem ein Wechsel der Beleuchtung von der ersten Beleuchtungseinheit 21 zur zweiten Beleuchtungseinheit 22 erfolgt. Im Gegensatz zu der hier gezeigten Beleuchtung durch beide Beleuchtungseinheiten 21, 22 kann zu dem dritten Zeitpunkt T3 die Plattenoberseite 2 auch gänzlich unbeleuchtet sein. Die beiden Beleuchtungseinheiten 21, 22 sind dann zu diesem dritten Zeitpunkt T3 ausgeschaltet, wodurch allerdings eine Inspektion der Plattenoberseite 2 erschwert ist.

Die Inspektion der Kanten der Platte 1 erfolgt mit Hilfe einer Inspektionsvorrichtung 30. Die hier gezeigte Inspektionsvorrichtung 30 stellt sowohl eine Kanteninspektionsvorrichtung 31, wie auch eine Plattenoberseiteninspektionsvorrichtung 32 dar. Sie kombiniert also die Inspektion der Kanten und die Inspektion der Plattenoberseite 2. Bei der hier gezeigten Inspektionsvorrichtung 30 ist es eine Zeilenkamera 33, die quer zur Bewegungsrichtung M der Platte 1 und parallel zur Plattenoberseite 2 verläuft. Die Inspektionsvorrichtung 30 ist senkrecht auf die Plattenoberseite 2 und senkrecht zur Transportrichtung M gerichtet. Sie nimmt zu verschiedenen Zeitpunkten jeweils ein zeilenförmiges Bild des unter ihr liegenden Inspektionsbereiches 70 auf. Diese zeilenförmigen Bilder werden zu einem Gesamtbild zusammengefügt und können analysiert werden. Dabei kann das Bild sowohl auf Defekte und/oder Unregelmäßigkeiten der Kanten als auch auf Defekte und/oder Unregelmäßigkeiten der Plattenoberseite 2 hin untersucht werden.

Ferner kann bei einer Analyse des Bildmaterials festgestellt werden, wo sich Kanten der Platte 1 momentan befinden. Mit diesen Informationen kann ein eventuelles Schalten zwischen der ersten Beleuchtungseinheit 21 und der zweiten Beleuchtungseinheit 22 gesteuert werden.

Ferner kann damit eine Vermessung der Platte 1 durchgeführt werden, indem die Lagen der Kanten zueinander berechnet werden.

Die Steuerung eines Schalt- oder Verstellvorganges kann auch durch andere Module erfolgen. Beispielsweise kann eine Lichtschranke 45 das Passieren der Platte 1 feststellen und dadurch die Verstellung der Beleuchtungsrichtung auslösen.

Eine weitere Möglichkeit zur Detektion der Position der Platte wäre beispielsweise eine als Waage 41' ausgestaltete Rolle 41, die das Gewicht einer auf ihr liegenden Platte detektiert und entsprechend den Verstell- oder Umschaltvorgang auslöst.

Um den Einsatz solcher Detektionsvorrichtungen zu vermeiden, können die Bewegung der Platte 1 und der Verstellvorgang der Beleuchtungseinrichtung 20 auch zeitlich synchronisiert sein.

Bei den hier gezeigten Beleuchtungseinheiten 21, 22 handelt es sich um Lichtquellen. Alternativ dazu könnten die Beleuchtungseinheiten 21, 22 jeweils nur aus Austrittsöffnungen bestehen, die Licht, das an einer anderen Stelle erzeugt wird, aus einer bestimmten Position und unter einem bestimmten Winkel auf den Inspektionsbereich 70 leiten oder richten. Beispielsweise könnten nur eine einzige Lichtquelle und zwei Austrittsöffnungen vorhanden sein. Ferner kommen Spiegel, oder andere lichtumlenkende oder lichtformende Elemente als Beleuchtungseinheiten in Frage.

Ferner zeigt Fig. 5 eine Steuereinheit 80, die dazu ausgestaltet ist, die beiden Beleuchtungseinheiten 21, 22 unabhängig voneinander zu steuern, insbesondere ein- und auszuschalten. Dazu ist die Steuereinheit 80 mit den beiden Beleuchtungseinheiten 21, 22 verbunden.

Die Steuereinheit 80 ist des Weiteren mit der Lichtschranke 45 verbunden und erhält von dieser ein Signal.

Auch die Inspektionsvorrichtung 30 ist mit der Steuereinheit 80 signalübertragend verbunden. Beispielsweise könnte die Inspektionsvorrichtung 30 ein Steuersignal an die Steuereinheit 80 ausgeben.

Alternativ zu der gezeigten Inspektion der Kanten mit einer einzigen Kanteninspektionsvorrichtung und einer Beleuchtung des Inspektionsbereiches 70 aus zwei Positionen in zwei Beleuchtungsrichtungen, ist es auch möglich, eine Kanteninspektion aus einer einzigen Beleuchtungsposition in zwei Beleuchtungsrichtungen durchzuführen. Bei dieser Ausführung ist es allerdings notwendig, mehrere Inspektionsbereiche 70 zu haben. Beispielsweise können zwei Zeilenkameras auf verschiedene Inspektionsbereiche 70 gerichtet sein. Bei einer Kanteninspektionsvorrichtung 31, die nicht so stark gerichtet ist wie eine Zeilenkamera 33, beispielsweise bei einer Kamera für zweidimensionale Bilder, wäre eine Inspektion zweier verschiedener Inspektionsbereiche in einem Bild notwendig.

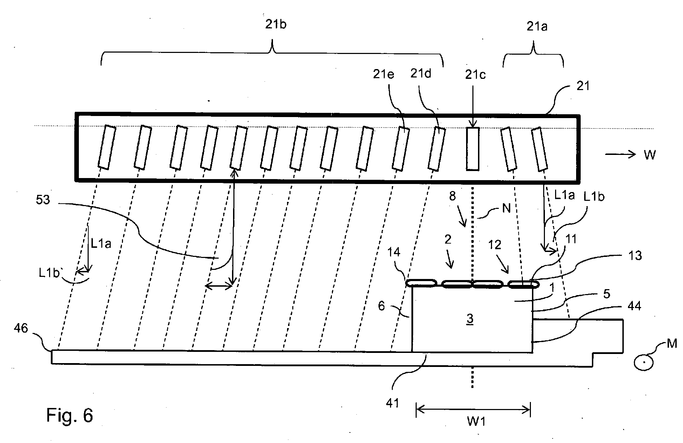

In Fig. 6 ist eine vorteilhafte Ausgestaltung eines erfindungsgemäßen Verfahrens, eines Lichtsteuerungssystems und eines erfindungsgemäßen Systems zur Auflichtinspektion in einer Frontalansicht entlang der Bewegungsrichtung M der Platte 1 gezeigt. Die Platte 1 liegt auf einer Unterlage 41 und an einem Anschlag 44. Eine erste seitliche Plattenseitenfläche 5 liegt teilweise an dem Anschlag 44 an. Ihr gegenüber liegt eine zweite seitliche Plattenseitenfläche 6, die an einer zweiten seitlichen Plattenkante 14 an die Plattenoberseite 2 angrenzt. Auf der Unterlage 41 befinden sich Sägespäne 46 (nicht dargestellt), die eine Analyse mit normalen bildgebenden und/oder bildverarbeitenden Systemen erschweren.

Über der Platte 1 befindet sich eine erste Beleuchtungseinheit 21, die die Platte 1, insbesondere die vordere Plattenkante 11 in einer ersten Beleuchtungsrichtung L1 vom Platteninneren 8 nach außen hin beleuchtet. Die erste Beleuchtungsrichtung L1 hat nicht nur eine Komponente in der Bewegungsrichtung M, sondern auch Komponenten L1b, L1b', die quer zur Bewegungsrichtung M der Platte 1 in und entgegen einer Breitenrichtung W verlaufen. Ein erster Teil 21a der Beleuchtungseinheit 21 weist eine Komponente L1b in der Breitenrichtung W auf. Ein zweiter Teil 21 b weist eine Komponente L1b' entgegen der Breitenrichtung W auf. Die Beleuchtungsrichtung des ersten Teiles 21a der Beleuchtungseinheit 21 bzw. des zweiten Teiles 21 b der Beleuchtungseinheit 21 erfolgt unter einem Winkel 53 bezogen auf den Normalvektor N der Plattenoberseite 2. Der Winkel 53 ist besonders vorteilhaft bei 35° zum Normalvektor N der Plattenoberseite 2 gewählt. Ein dritter Teil 21c weist lediglich die Komponente L1a in der Bewegungsrichtung und keine Komponente in der Breitenrichtung W auf. Durch diese Ausgestaltung ist es möglich, nicht nur die vordere Plattenkante 11 und die hintere Plattenkante 12 durch die erfindungsgemäße schräge Beleuchtung vom Platteninneren her zu inspizieren. Auch eine Inspektion der seitlichen Plattenkanten 13, 14 ist möglich, da diese Plattenkanten jeweils vom Platteninneren 8 her nach außen hin beleuchtet sind. Auch an diesen seitlichen Plattenkanten 13, 14 wird ein Helligkeitskontrast zwischen der Plattenoberseite 2 und der dunkleren seitlichen Plattenseitenfläche 5 bzw. 6 erzeugt. Je nach Abstand der Beleuchtungseinheit 21 und den eingestellten Beleuchtungsrichtungen L1 sollten die zu untersuchenden Platten 1 jedoch über eine gewisse Mindestbreite und/oder Mindesthöhe verfügen.

In der hier dargestellten Ausführungsform ist der erste Teil 21a der Beleuchtungseinheit 21 und der zweite Teil 21b der Beleuchtungseinheit 21 nach außen gerichtet. Um einen schrägeren Winkel zu erzielen, können der erste Teil 21a und der zweite Teil 21b so angeordnet sein, dass sich die austretenden Lichtstrahlen an einem Punkt über der Platte 1 kreuzen.

Um Energie zu sparen und/oder um unnötige Beleuchtung zu vermeiden, können einzelne Lichtquellen oder Elemente der Beleuchtungseinheit 21 unabhängig voneinander ein- und ausschaltbar sein. Beispielsweise kann die Lampe 21e ausgeschaltet und Lampe 21d eingeschaltet sein, wenn eine Platte 1 mit einer geringen Breite, etwa mit der gezeigten Breite W1 inspiziert wird.

In Fig. 6 ist lediglich exemplarisch die erste Beleuchtungseinheit 21 dargestellt. Die zweite Beleuchtungseinheit kann ebenfalls wie die hier gezeigte erste Beleuchtungseinheit 21 ausgestaltet sein.

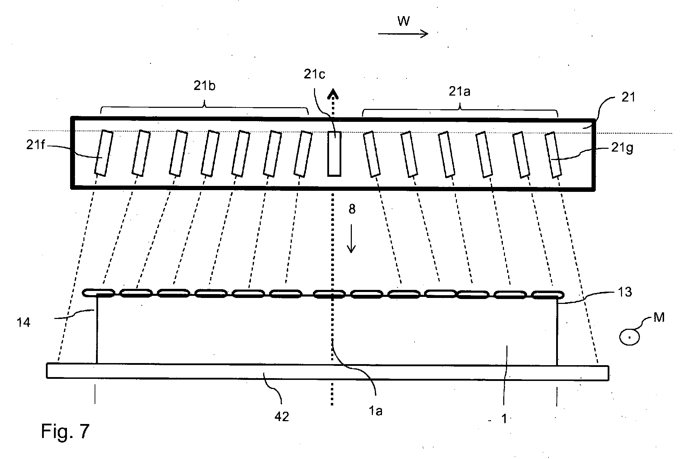

In Fig. 7 ist eine weitere Ausgestaltung eines erfindungsgemäßen Verfahrens, eines Lichtsteuerungssystems und eines erfindungsgemäßen Systems zur Auflichtinspektion in einer Frontalansicht entlang einer Bewegungsrichtung M der Platte 1 dargestellt. Auch hier verfügt die Beleuchtungseinheit 21 über einen ersten Teil 21 a und einem zweiten Teil 21b, die die seitlichen Plattenkanten 13, 14 vom Platteninneren 8 her nach außen hin beleuchten. In diesem Fall liegt die Platte 1 jedoch mittig auf der Unterlage 42, wobei sich die Mitte der Platte 1 a unter einem dritten Teil 21 c der Beleuchtungseinheit befindet, dessen Beleuchtungsrichtung keine Komponente in der Breitenrichtung W aufweist. Um Energie zu sparen und um eine unnötige Beleuchtung, die einen Kontrast verschlechtern könnte, zu vermeiden können einzelne Lampen der Beleuchtungseinheit 21 unabhängig voneinander ein- und ausgeschaltet werden. Um den Steuerungsaufwand klein zu halten, können bei dieser Ausgestaltung zwei Lampen jeweils paarweise ein- und ausschaltbar sein. Beispielsweise kann die Lampe 21f gleichzeitig mit der Lampe 21g auf der gegenüberliegenden Seite der Beleuchtungseinheit 21 gekoppelt sein.

## Patentansprüche

1. Verfahren zur Auflichtinspektion von wenigstens zwei gegenüberliegenden oberen Plattenkanten einer Platte (1) die sich in einer Bewegungsrichtung (M) bewegt, wobei zunächst eine erste Plattenkante (11) der Platte (1) in einer ersten Beleuchtungsrichtung (L1, L1'), welche schräg zu einer Draufsicht (8) der Plattenoberseite (2) zur untersuchenden ersten Plattenkante (11) der Platte (1) verläuft und anschließend, nachdem die Beleuchtungsrichtung (L, L') verstellt wurde, eine weitere Plattenkante (12) der Platte (1) in einer zweiten Beleuchtungsrichtung (L2, L2'), welche schräg zu der Draufsicht (8) der Plattenoberseite (2) zur untersuchenden weiteren Plattenkante (12) der Platte (1) verläuft, beleuchtet und jeweils ein zur Inspektion der wenigstens zwei gegenüberliegenden oberen Plattenkanten (11, 12) dienender Helligkeitskontrast an der jeweiligen Plattenkante angrenzenden Plattenflächen (3, 4) erzeugt wird und wobei der Helligkeitskontrast der wenigstens zwei gegenüberliegenden oberen Plattenkanten (11, 12) für eine Vermessung der Platte (1) oder als Mass für eine Beurteilung der Qualität der wenigstens zwei gegenüberliegenden oberen Plattenkanten (11, 12) verwendet wird.

2. Verfahren nach Anspruch 1, **dadurch gekennzeichnet, dass** die erste Plattenkante eine vordere Plattenkante (11) und die weitere Plattenkante eine hintere Plattenkante (12) einer in der Bewegungsrichtung (M) der Platte (1) gegenüberliegenden Plattenkanten sind.

3. Verfahren nach Anspruch 2, **dadurch gekennzeichnet, dass** ein Abbild der vorderen Plattenkante (11) aufgenommen wird, wenn sie in der ersten Beleuchtungsrichtung (L1, L1') beleuchtet wird, und ein Abbild der hinteren Plattenkante (12) aufgenommen wird, wenn sie in der zweiten Beleuchtungsrichtung (L2, L2') beleuchtet wird.

4. Verfahren nach einem der vorhergehenden Ansprüche, **dadurch gekennzeichnet, dass** die Verstellung zwischen der ersten und der zweiten Beleuchtungsrichtung (L1, L1'; L2, L2') alternierend verläuft.

5. Verfahren nach einem der vorhergehenden Ansprüche, **dadurch gekennzeichnet, dass** zunächst nur die erste Plattenkante der Platte (1) und dann nur die weitere Plattenkante der Platte (1) beleuchtet werden.

6. Verfahren nach einem der vorhergehenden Ansprüche, **dadurch gekennzeichnet, dass** eine Position der zu untersuchenden Platte (1) detektiert und die Beleuchtungsrichtung (L, L') abhängig von der Position der Platte (1) verstellt wird.

7. Verfahren nach einem der vorhergehenden Ansprüche, **dadurch gekennzeichnet, dass** die Platte (1) zuerst in und anschließend entgegen der Bewegungsrichtung (M) beleuchtet wird.

8. Verfahren nach einem der vorhergehenden Ansprüche, **dadurch gekennzeichnet, dass** zusätzlich die Plattenoberseite (2) inspiziert wird.

9. Verfahren nach einem der vorhergehenden Ansprüche, **dadurch gekennzeichnet, dass** seitliche Plattenkanten (13,14), die zu der Bewegungsrichtung (M) der Platte (1) parallel sind, während der Bewegung schräg zu der Draufsicht (8) der Plattenoberseite (2) zu den seitliche Plattenkanten (13, 14) beleuchtet werden.

10. System zur Auflichtinspektion von sich in einer Bewegungsrichtung (M) einer Platte (1) gegenüberliegenden Plattenkanten, umfassend ein Lichtsteuerungssystem mit einer Beleuchtungseinrichtung (20) mit einer relativ zu der Bewegungsrichtung (M) der Platte (1) verstellbaren Beleuchtungsrichtung (L) und eine Steuereinheit (80), wobei die Steuereinheit (80), dazu ausgestaltet ist, die Beleuchtungsrichtung (L) der Beleuchtungseinrichtung (20) zu verstellen, **dadurch gekennzeichnet, dass** eine Erfassungs- und Auswertevorrichtung vorgesehen ist, wobei die Erfassungsvorrichtung ausgestaltet ist, Helligkeitskontraste an einer zu untersuchenden Kante zu detektieren und die Auswertevorrichtung ausgestaltet ist, den Helligkeitskontrast der wenigstens zwei gegenüberliegenden oberen Plattenkanten für eine Vermessung der Platte (1) oder als ein Mass für eine Beurteilung der Qualität der wenigstens zwei gegenüberliegenden oberen Plattenkanten auszuwerten.

11. System zur Auflichtinspektion nach Anspruch 10, weiter umfassend eine Detektionsvorrichtung, dazu ausgestaltet, die Position mindestens einer zu untersuchenden Plattenkante zu detektieren und Informationen zur Position auszugeben und/oder weiterzuleiten.

12. System zur Auflichtinspektion nach einem der Ansprüche 10 oder 11, wobei die Beleuchtungseinrichtung (20) eine erste Beleuchtungseinheit (21) mit einer ersten Beleuchtungsrichtung (L1, L1'), die eine Komponente in der Bewegungsrichtung (40) aufweist, und
eine zweite Beleuchtungseinheit (22) mit einer zweiten Beleuchtungsrichtung (L2, L2'), die eine Komponente entgegen der Bewegungsrichtung (M) aufweist, umfasst, und wobei die Steuereinheit (80) dazu ausgestaltet ist, die beiden Beleuchtungseinheiten (21, 22) unabhängig voneinander ein- und auszuschalten, wobei vorzugsweise die Steuervorrichtung (80) so einstellbar ist, dass nur die zur Inspektion notwendige, schräg zu einer Draufsicht (8) der Plattenoberseite (2) auf die untersuchte Plattenkante gerichtete Beleuchtungseinheit (21, 22) eingeschaltet und die andere Beleuchtungseinheit (21, 22) ausgeschaltet ist.

13. System zur Auflichtinspektion nach Anspruch 12, wobei ein erster Teil der ersten und / oder zweiten Beleuchtungseinheit (21, 22) schräg zu der Draufsicht (8) der Plattenoberseite (2) zu einer ersten seitlichen Plattenkante (13) hin gerichtet ist und ein zweiter Teil der ersten und / oder zweiten Beleuchtungseinheit (21, 22) schräg zu der Draufsicht (8) der Plattenoberseite (2) zu einer zweiten seitlichen Plattenkante (14) hin gerichtet ist.

14. System zur Auflichtinspektion nach einem der Ansprüche 11 bis 13, wobei die erste Beleuchtungseinheit (21) und zweite Beleuchtungseinheit (22) quer zur Bewegungsrichtung (M) der Platte (1) voneinander weg und jeweils nach außen gerichtet sind.

## Claims

1. Procedure for the incident light inspection of at least two opposite upper panel edges of a panel (1) which moves in one movement direction (M), whereby a first panel edge (11) of the panel (1) initially illuminates in a first lighting direction (L1, L1') which runs at an angle to a top view (8) of the upper panel side (2) to the first panel edge (11) to be examined of the panel (1) and then, after the lighting direction (L1, L1') has been changed, a further panel edge (12) of the panel (1) illuminates in a second lighting direction (L2, L2') which runs at an angle to the top view (8) of the upper panel side (2) to the further panel edge (12) to be examined of the panel (1), and in each case a brightness contrast on the panel surfaces (3, 4) adjacent to the respective panel edge is generated for purposes of the inspection of the at least two opposite upper panel edges (11, 12), and whereby the brightness contrast of the at least two opposite upper panel edges (11, 12) is used for measuring the panel (1) or as a measure for assessing the quality of the at least two opposite upper panel edges (11, 12).

2. Procedure in accordance with Claim 1, **characterized in that** the first panel edge is a front panel edge (11) and the further panel edge is a rear panel edge (12) of the panel edge which is located opposite in the movement direction (M) of the panel (1).

3. Procedure in accordance with Claim 2, **characterized in that** an image of the front panel edge (11) is taken when it is in the first lighting direction (L1, L1'), and that an image of the rear panel edge (12) is taken when it is in the second lighting direction (L2, L2').

4. Procedure in accordance with one of the above Claims, **characterized in that** the change between the first and the second lighting directions (L1, L1'; L2, L2') is effected alternately.

5. Procedure in accordance with one of the above Claims, **characterized in that** initially only the first panel edge of the panel (1) is illuminated, and then only the further panel edge of the panel (1) is illuminated.

6. Procedure in accordance with one of the above Claims, **characterized in that** a position of the panel (1) to be examined is detected and the movement direction (L, L') is changed depending on the position of the panel (1).

7. Procedure in accordance with one of the above Claims, **characterized in that** the panel (1) is first illuminated in the movement direction (M) and then against the movement direction (M).

8. Procedure in accordance with one of the above Claims, **characterized in that** the upper panel side (2) is also inspected.

9. Procedure in accordance with one of the above Claims, **characterized in that** lateral panel edges (13, 14), which are parallel to the movement direction (M) of the panel (1), are illuminated at an angle to the top view (8) of the upper panel side (2) towards the lateral panel edges (13, 14) during the movement.

10. System for the incident light inspection of panel edges positioned opposite each other in a movement direction (M) of a panel (1) comprising a lighting control system with a lighting device (20) with a lighting direction (L) adjustable in relation to the movement direction (M) of the panel (1) and a control unit (80), whereby the control unit (80) is designed to adjust the lighting direction (L) of the lighting device (20), **characterized in that** a detection and evaluation device is provided for, whereby the detection device is designed to detect brightness contrasts on an edge to be examined, and the evaluation device is designed to evaluate the brightness contrast of the at least two opposite upper panel edges for measuring the panel (1) or as a measure for assessing the quality of the at least two opposite upper panel edges.

11. System for incident light inspection in accordance with Claim 10, additionally comprising a detection device designed to detect the position of at least one of the panel edges to be examined and to output and/or forward information about this position.

12. System for incident light inspection in accordance with one of Claims 10 or 11, whereby the lighting device (20) comprises a first lighting unit (21) with a first lighting direction (L1, L1'), which has a component in the movement direction (M), and
a second lighting unit (22) with a second lighting direction (L2, L2'), which has a component against the movement direction (M),
and whereby the control unit (80) is designed to switch the two lighting units (21, 22) on and off, independent of each other, whereby the control unit (80) is preferably adjustable in such a way that only the lighting unit (21, 22) directed towards the examined panel edge at an angle to a top view (8) of the upper panel side (2) is switched on and the other lighting unit (21, 22) is switched off.

13. System for incident light inspection in accordance with Claim 12, whereby a first part of the first and / or second lighting unit (21, 22) is directed at an angle to the top view (8) of the upper panel side (2) towards a first lateral panel edge (13) and a second part of the first and / or second lighting unit (21, 22) is directed at an angle to the top view (8) of the upper panel side (2) towards a second lateral panel edge (14).

14. System for incident light inspection in accordance with one of Claims 11 to 13, whereby the first lighting unit (21) and second lighting unit (22) are directed away from each other and in each case are directed outwards at right angles to the movement direction (M) of the panel (1).

## Revendications

1. Procédé d'inspection par éclairage vertical d'au moins deux bords de plaque supérieurs opposés d'une plaque (1), laquelle se déplace dans un sens de déplacement (M), un premier bord de plaque (11) de la plaque (1) étant d'abord éclairé dans un premier sens d'éclairage (L1, L1'), lequel court obliquement par rapport à une vue de dessus (8) de la face supérieure de la plaque (2) vers le premier bord de plaque (11) à examiner de la plaque (1), et ensuite, après que le sens de l'éclairage (L, L') a été réglé, un autre bord de plaque (12) de la plaque (1) étant éclairé dans un second sens d'éclairage (L2, L2'), lequel court obliquement par rapport à la vue de dessus (8) de la face supérieure (2) vers l'autre bord de plaque (12) à examiner de la plaque (1), et un contraste de luminosité servant à l'inspection des au moins deux bords de plaque supérieurs opposés (11, 12) est respectivement généré sur des surfaces de la plaque (3, 4) contiguës au bord de plaque respectif et le contraste de luminosité des au moins deux bords supérieurs de plaque opposés (11, 12) étant utilisé pour exécuter la mesure de la plaque (1) ou comme mesure pour l'évaluation de la qualité des au moins deux bords de plaque supérieurs opposés (11, 12).

2. Procédé selon la revendication 1, **caractérisé en ce que** le premier bord de plaque est un bord de plaque avant (11) et l'autre bord de plaque est un bord de plaque arrière (12) des bords de plaques s'opposant dans le sens de déplacement (M) de la plaque (1).

3. Procédé selon la revendication 2, **caractérisé en ce qu'**une image du bord de plaque avant (11) est prise lorsqu'il est éclairé dans le premier sens d'éclairage (L1, L1'), et qu'une image du bord de plaque arrière (12) est prise lorsqu'il est éclairé dans le second sens d'éclairage (L2, L2').

4. Procédé selon l'une des revendications précédentes, **caractérisé en ce que** le réglage entre le premier et le second sens d'éclairage (L1, L1'; L2, L2') s'effectue en alternance.

5. Procédé selon l'une des revendications précédentes, **caractérisé en ce que** d'abord seul le premier bord de plaque de la plaque (1) et ensuite seul l'autre bord de plaque de la plaque (1) est éclairé.

6. Procédé selon l'une des revendications précédentes, **caractérisé en ce qu'**une position de la plaque à examiner (1) est détectée et que le sens d'éclairage (L, L') est réglé indépendamment de la position de la plaque (1).

7. Procédé selon l'une des revendications précédentes, **caractérisé en ce que** la plaque (1) est éclairée d'abord dans le sens puis dans le sens inverse du déplacement (M).

8. Procédé selon l'une des revendications précédentes, **caractérisé en ce que** la face supérieure de la plaque (2) est en plus inspectée.

9. Procédé selon l'une des revendications précédentes, **caractérisé en ce que** tous les bords de plaque (13, 14), qui sont parallèles au sens de déplacement (M) de la plaque (1), sont éclairés pendant le déplacement oblique par rapport à la vue de dessus (8) de la face supérieure de la plaque (2) vers les bords de plaques latéraux (13, 14).

10. Système pour l'inspection par éclairage vertical de bords de plaque opposés dans un sens de déplacement (M) d'une plaque (1), comprenant un système de commande de la lumière avec un dispositif d'éclairage (20) avec un sens d'éclairage (L) réglable en relation avec le sens de déplacement (M) de la plaque (1) et une unité de commande (80), cette unité de commande (80) étant agencée pour régler le sens d'éclairage (L) du dispositif d'éclairage (20), **caractérisée en ce qu'**un dispositif de détection et d'évaluation est prévu, le dispositif de détection étant agencé pour détecter les contrastes de luminosité d'un bord à examiner et le dispositif d'évaluation étant agencé pour évaluer le contraste de luminosité des au moins deux bords supérieurs de plaque opposés pour une exécution de la mesure de la plaque (1) ou comme mesure pour l'évaluation de la qualité des au moins deux bords de plaque supérieurs opposés.

11. Système pour l'inspection par éclairage vertical selon la revendication 10, comprenant par ailleurs un dispositif de détection agencé pour détecter au moins un des bords de plaque à examiner et sortir et / ou retransmettre des informations sur la position.

12. Système pour l'inspection par éclairage vertical selon l'une des revendications 10 ou 11, le dispositif d'éclairage (20) comprenant une première unité d'éclairage (21) avec un premier sens d'éclairage (L1, L1') qui présente une composante dans le sens de déplacement (M), et
une seconde unité d'éclairage (22) avec un second sens d'éclairage (L2, L2') qui présente une composante dans le sens inverse du déplacement (M),
et l'unité de commande (80) étant agencée pour mettre sous et hors tension les deux unités d'éclairage (21, 22) indépendamment l'une de l'autre, l'unité de commande (80) étant de préférence réglable de sorte que seule l'unité d'éclairage (21, 22) nécessaire pour l'inspection, dirigée obliquement par rapport à une vue du dessus (8) de la face supérieure de la plaque (2) sur le bord de plaque examiné soit sous tension et que l'autre unité d'éclairage (21, 22) soit hors tension.

13. Système pour l'inspection par éclairage vertical selon la revendication 12, une première partie de la première et / ou de la seconde unité d'éclairage (21, 22) étant dirigée vers un premier bord de plaque latéral (13), obliquement par rapport à la vue de dessus (8) de la face supérieure de la plaque (2) et une seconde partie de la première et / ou de la seconde unité d'éclairage (21, 22) étant dirigée vers un second bord de plaque latéral (14), obliquement par rapport à la vue de dessus (8) de la face supérieure de la plaque (2).

14. Système pour l'inspection par éclairage vertical selon l'une des revendications 11 à 131, la première unité d'éclairage (21) et la seconde unité d'éclairage (22) étant éloignées l'une de l'autre, transversalement au sens du déplacement (M) de la plaque (1) et respectivement dirigées vers l'extérieur.
